(19) Europäisches Patentamt
European Patent Office
Office européen des brevets

(11) **EP 4 290 074 A1**

(12) **EUROPEAN PATENT APPLICATION**

(43) Date of publication:
**13.12.2023 Bulletin 2023/50**

(21) Application number: **22178183.4**

(22) Date of filing: **09.06.2022**

(51) International Patent Classification (IPC):
*F03D 17/00* (2016.01)    *G06F 30/23* (2020.01)
*G06F 111/10* (2020.01)    *G06F 111/20* (2020.01)
*G06F 113/06* (2020.01)

(52) Cooperative Patent Classification (CPC):
**G06F 30/23; F03D 17/00;** F05B 2260/84;
G06F 2111/10; G06F 2111/20; G06F 2113/06

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Akselos S.A.**
**1015 Lausanne (CH)**

(72) Inventors:
• **Ballani, Jonas**
  **1015 Lausanne (CH)**
• **Knezevic, David**
  **1015 Lausanne (CH)**

(74) Representative: **Novagraaf International SA**
**Chemin de l'Echo 3**
**1213 Onex, Geneva (CH)**

(54) **METHOD AND SYSTEM FOR MODELLING A WIND POWER GENERATION STRUCTURE**

(57)    A method and system is provided for modelling wind power generation structures, for example for use during design or monitoring phases. The method includes: defining a plurality of virtual components of a virtual wind power generation structure, each virtual component being dependent on one or more virtual component parameters; deriving a dataset in the frequency domain for each of the plurality of virtual components; assembling the virtual wind power generation structure based on the plurality of virtual components;
performing a time domain simulation of the virtual wind power generation structure based on the derived datasets; and evaluating the simulation according to a set of evaluation criteria. The method may also include importing data from a physical wind power generation structure.

Fig. 1

**Description**

TECHNICAL FIELD

The present disclosure relates to the field of modelling wind power generation structures. Such a system can be used for example to design, monitor and improve such structures.

BACKGROUND

Wind power generation structures, such as wind turbines and in particular support structures for such, are highly complex systems to design and implement, as well as to monitor during operation. In particular, due to the high level of complexity of dynamic simulations, current design techniques for wind turbines or their support structures are based on global low-fidelity models, such as beam models. In some cases, these models are linked to more detailed sub-models of specific components of the wind power generation structure. Such techniques, however, do not enable a structure to be fully modelled or monitored. A fully detailed coupled 3D simulation of all relevant parts of a wind power generation structure, such as a wind turbine or a support structure therefor, has remained intractable with traditional techniques.

Further, whilst typically fitted with complex sensor systems, monitoring and evaluating the performance and potential improvements of a wind power generation structure, relies on the above-mentioned low-fidelity models to detect potential areas that require maintenance and to suggest performance upgrades or modifications.

There is, therefore, a need for an improved method and system for modelling such wind power generation structures.

SUMMARY

The present disclosure concerns a method for modelling a virtual wind power generation structure, the virtual wind power generation structure comprising a plurality of virtual components, the method comprising:

defining a plurality of virtual components, each virtual component comprising one or more virtual component parameters;
deriving a dataset in the frequency domain for each of the plurality of virtual components;
assembling the virtual asset based on the plurality of virtual components;
performing a time domain simulation of the virtual wind power generation structure based on the derived datasets; and
evaluating the simulation according to a set of evaluation criteria.

Additional features of the method are provided in the dependent claims of the present disclosure.

The present disclosure further concerns a computer program comprising instructions which, when the program is executed by a computer, cause the computer to carry out the method as set out above.

The present disclosure additionally concerns a computer readable medium including program instructions which, when executed by a computer, cause the computer to carry out the method as set out above.

Further, the present disclosure concerns a computer system, the computer system comprising a processing unit, wherein the computer system is operable to carry out the method as set out above.

BRIEF DESCRIPTION OF THE DRAWINGS

Other features, purposes and advantages of the invention will become more explicit by means of reading the detailed statement of the nonrestrictive embodiments made with reference to the accompanying drawings.

Figure 1 shows schematically a system according to an embodiment of the present disclosure for modelling a wind power generation structure.

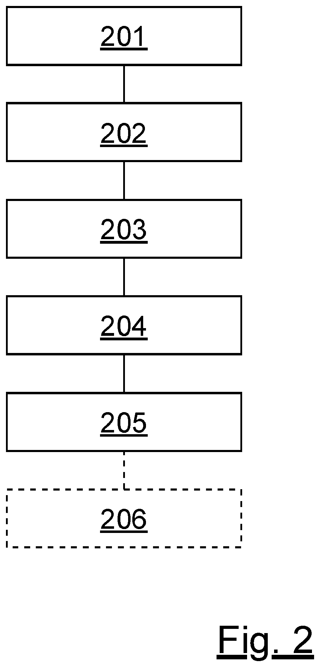

Figure 2 illustrates the method of using the system of Figure 1.
Figure 3 illustrates a virtual component that can be used in the system of Figure 1.
Figure 4 shows a method according to a further embodiment of the present disclosure for modelling a physical wind power generation structure.
Figure 5 illustrates schematically a system implementing the method of Figure 4.
Figure 6 shows a method according to a further embodiment of the present disclosure for modelling a wind power generation structure.
Figure 7 illustrates schematically a system implementing the method of Figure 6.

DETAILED DESCRIPTION

One known tool for structural integrity analysis of industrial equipment or other structures is the Finite Element (FE) method. A basic system for carrying out FE analysis at equilibrium can be formulated as:

$$KU = F$$

wherein K is the stiffness matrix, U is the displacement vector and F is the load vector. The above formulation is well described in the art and will not be discussed in more detail in the present disclosure. It is presented purely for illustrative purposes and for ease of explanation of the following methods. It should also be noted that any formulations described in the following are presented purely for illustrative purposes and ease of explanation. It is not intended to discuss the specifics of the mathematical operations in detail.

Whilst FE satisfies requirements around standards compliance and certifiable accuracy, it requires significant computational resources to perform. This is because the computational resources required by FE typically grows superlinearly with the number of degrees of freedom, which renders large-scale systems unfeasible for modelling purposes. Additionally, if any parameters or variables are changed, FE-based methods typically require that the solution is computed from scratch, which is disadvantageous for computationally intensive systems.

To counter this, a number of submodeling-based approaches have been developed (e.g., coarse global models and separate fine local models). However, such approaches do not take into account non-local and cumulative effects, thereby leading to a reduced accuracy of the results.

Other approaches that are investigated and used are methods based on artificial intelligence and machine learning (AI and ML). AI/ML methods enable fast analysis of systems, typically by evaluating specific quantities of interest (QoIs) as a function of parameters. However, AI/ML models are well known to be 'black boxes', which can be difficult or impossible to interpret. This can render it impossible to verify or evaluate the accuracy of individual elements or components in the system, or indeed the accuracy of the entire system. Further, AI/ML methods are not typically based on first principles of physics or compliant with physics-based asset integrity standards, which is disadvantageous for digital twins or when modelling systems realistically.

A number of reduced order modeling (ROM) methods have been developed that could be used for the above purposes, including Proper Orthogonal Decomposition (POD), Proper Generalized Decomposition (PGD), or Certified Reduced Basis Method. Such methods can provide speed, and - depending on the ROM type - may also provide parametric modeling and certifiable accuracy. However, the ROMs generally do not enable holistic and detailed modeling of large-scale systems, such as floating wind power generation structures. The ROM approaches mentioned above are not well-suited to this type of large-scale model, since ROMs need to be "trained" by solving the full order model many times for different configurations, and this is prohibitively expensive when the full-order model is very large-scale.

One approach to overcome this problem is the Static Condensation Reduced Basis Element (SCRBE) methodology. This methodology builds on the Certified Reduced Basis Method to provide a physics-based ROM of parametric partial differential equations (PDEs). As is typical for ROM approaches, SCRBE involves an Offline/Online decomposition in which the model data is "trained" during the Offline stage, and subsequently evaluated for specific parameter choices during the Online stage. The Offline stage is computationally intensive, but once it is complete the Online stage may be evaluated very quickly (typically orders of magnitude faster than a corresponding FE solve) for any new parameter choices within a pre-defined range. A SCRBE methodology enables fast and detailed parametric analysis of large-scale systems (e.g., floating wind power generation structures).

An additional problem when dealing with analysis of structures is that of frequency domain analysis of forced vibrations (also known as Helmholtz elastodynamics). Such a system can be formulated as

$$(K - \omega^2 M)U = F$$

wherein $\omega$ is the frequency, $M$ is a FE-discretized mass matrix and U is a complex-valued vector that represents pressure or structural response of the system. Whilst this system could be solved by way of the standard FE methodology, the computational cost is significantly higher due to the inclusion of the frequency. Unlike the above-described system, in order to solve this system, it is typically required to evaluate a range of frequencies, which increases the computational cost. However, the SCRBE approach can be used to efficiently and quickly resolve this system.

When performing structural analysis, it is in some circumstances necessary or advantageous to consider a dynamic situation wherein the system varies over time. A parametrized dynamic model of the above system can be formulated as

$$M\ddot{U} + C\dot{U} + KU = F$$

wherein M is the FE-discretized mass matrix, C is a damping matrix and K is the stiffness matrix. In this formulation, the displacement field U is a function of time.

This structural system is evaluated as a function of time. In one method, which may be referred to as the 'modal approach', the first $N_{modes}$ eigenvalue/eigenmode pairs of a corresponding eigenvalue problem are evaluated:

$$K(\mu)V^j(\mu) = \lambda^j(\mu)M(\mu)V^j(\mu), j = 1, \dots, N_{modes}$$

wherein $\lambda$ is the eigenvalue and V is the eigenvector.

The dynamic solution can be represented by modal superposition on the truncated set of eigenmodes:

$$U(\mu, t) = \sum_{j=1}^{N_{modes}} W_j(\mu, t)V^j(\mu)$$

wherein $W$ is the coefficient vector and V is the eigenvector.

Provided that $N_{modes}$ is sufficiently large, this approach can illustrate the global dynamics of the system to a sufficient degree of accuracy. However, for some systems, this approach may not be computationally feasible or sufficiently accurate. In particular the modal approach has a number of key limitations. Firstly, it is not a parametrized approach, so any change to model parameters requires that the eigenvalues and eigenmodes must be recomputed, which can be highly computationally intensive. As a result this limits the applicability of the modal approach in the context of design analysis, where many different designs (characterized by different parameter choices) must be considered. It also limits the applicability of the modal approach in the digital twin context, in which the parameters defining an asset change over time, and hence must be updated periodically. Secondly, the modal approach is based on the "natural response" of the system, and hence it does not necessarily accurately capture the response to forced vibration. This limits the accuracy of the modal approach when considering systems with complex loading, such as offshore wind turbine structures. A number of alternative methods to the modal approach exist, such as the Craig-Bampton method, or Component Mode Synthesis, and these have similar drawbacks to the modal approach.

A number of exemplary methods and systems that address at least some of the above shortcomings will now be discussed in more detail.

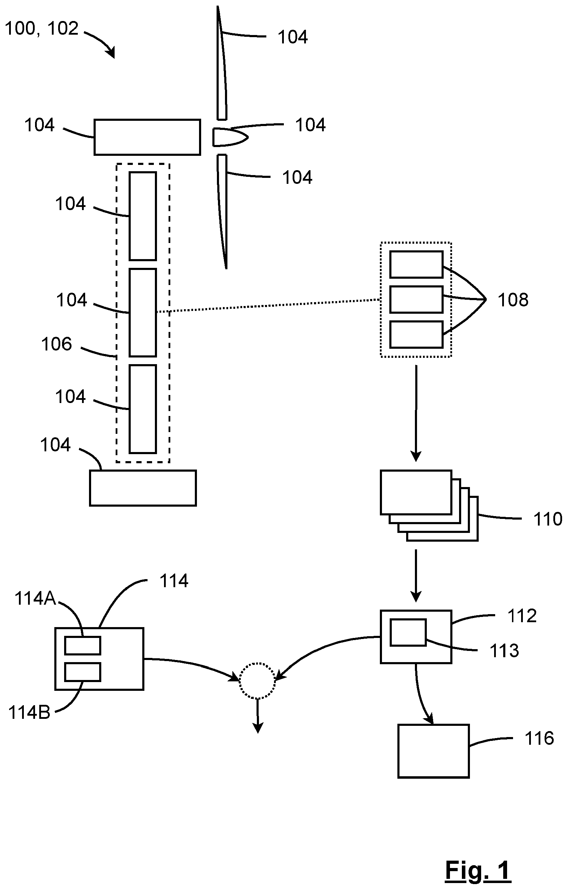

Figure 1 shows a method and system for modelling a virtual wind power generation structure 100, the virtual wind power generation structure comprising a plurality of virtual components, in accordance with the present disclosure.

The virtual wind power generation structure 100 may be any suitable type or category of structure. For example, the virtual wind power generation structure may be a wind turbine. The virtual wind power generation structure, in some examples, is intended to substantially correspond to a real world structure (i.e., a "digital twin"). In other examples, the virtual wind power generation structure corresponds to a structure that is intended for manufacture, but which has yet to be built.

The virtual wind power generation structure may be a virtual composite model consisting of a plurality of models 102, each of said plurality of models representing at least one of a plurality of virtual components 104 or virtual sub structures 106 of the virtual wind power generation structure. For example, each of the virtual components may represent a portion or substructure of a physical structure to be modelled by the virtual wind power generation structure (e.g., if the virtual wind power generation structure is a digital twin of a real world object). For purposes of conciseness and for ease of explanation, in the following reference will be made exclusively to virtual components, although it will be understood that, in principle, reference could equally well be made to virtual portions or sub-structures (which may each consist of one or more virtual components).

In a first step 201, a plurality of virtual components 104 are defined, each virtual component being dependent on one or more virtual component parameters. The virtual components may be defined in any suitable manner and using any suitable methodology. In some examples, the virtual components are pre-defined in a relevant manner, e.g., by way of a suitable application. Once defined in the application, they are imported or otherwise transferred to the present method or the system in which the present method is to be implemented. Purely for illustrative and exemplary purposes, the virtual components can be defined in a modelling application and subsequently be imported into a modelling application).

A virtual component may be model a portion of the wind power generation structure, for example a portion of an element such as the nacelle, the pylon or the turbine, or a portion of the volume of the wind power generation structure. It may be defined by dimensions and other parameters, as detailed below.

Any suitable number of virtual components 104 may be defined. As discussed above, the virtual wind power generation structure 100 may comprise any relevant number of virtual components. In some examples, the number of virtual components is dependent on the size, complexity and/or other properties of the virtual wind power generation structure. In some examples, the number of virtual components is dependent on the granularity and/or accuracy required or desired of the modelling process. Additionally, a higher number of virtual components allows an overall increase of the number of parameters in the model. Since any given component can only have a limited number of parameters, increasing the number of virtual components allows the model to have a higher number of parameters.

By increasing the number of virtual components the effective resolution of the overall model is increased. In turn, this may improve accuracy of the modelling.

Each of the virtual components 104 may be dependent on any suitable number of virtual component parameters 108. Each of the virtual components may comprise any suitable types of virtual component parameters. The virtual component parameters define or describe various properties of the virtual components. For example, the virtual component parameters can be used to define physical properties of a given component. Examples, include (without limitation): material density, stiffness, temperature, thickness, or other material properties. The virtual component parameters may comprise any suitable amount of data. In some examples, a virtual component parameter comprises a single data component, e.g., a fixed material parameter or pre-defined mechanical constant (such as Young's modulus). In other examples, a virtual component comprises a plurality of data components or a data range.

Some or all the parameters with a single virtual component 104 may be linked by mathematical relationships, such as stiffness and thickness, for example. In addition, a mathematical relationship may exist between the parameters of one virtual component and the same parameter of another virtual component.

Two or more of virtual components may share one or more virtual component parameters, if, for example, the two or more virtual components are of a similar type or share one or more properties. For purposes of clarity only, Figure 1 only shows a set of virtual component parameters 108 for a single virtual component 104. However, it will be appreciated that each of the number of virtual components comprises a suitable set of virtual component parameters.

The virtual component parameters may be used in a suitable way. In some examples, the virtual component parameters are used in functions or operations in one or more of the subsequent steps. This will be described in more detail in the following.

In some examples, at least one of the parameters for at least one of the plurality of virtual components 104 comprises sensor data obtained from an operational data source associated with a physical wind power generation structure. In other examples, at least one parameter for at least one of the plurality of virtual components is obtained from known, usual or targeted values. Finally, at least one parameter for at least one of the plurality of virtual components is a material parameter that is acquired from a material testing of an element intended to be part of a physical wind power generation structure This will be discussed in more detail in the following.

For illustrative purposes, an exemplary virtual component will be described in more detail in the following examples.

In a second step 202, a dataset 110 is derived in the frequency domain for each of the plurality of virtual components 104. The dataset may be derived in any suitable fashion and may comprise any suitable or relevant data or information.

In some examples, the dataset 110 is derived based on a Finite Element Analysis. It will be appreciated that a number of implementations of a Finite Element Analysis, examples of which have been discussed above, may be envisaged within the scope of the present disclosure. In some examples, the dataset is derived based on a Reduce Basis Finite Element Analysis. In examples, the dataset is derived based on a Reduced Basis Finite Element Analysis for specific selected virtual component parameter values. In specific examples, the dataset is derived based on the SCRBE methodology described above.

The virtual component parameter values may be selected in any suitable manner, an exemplary one of which will be described in more detail in a subsequent example. Purely for illustrative purposes, in an example, the SCBRE method described above is used to solve the Helmholtz elastodynamics system at a discrete set of frequencies that cover an entire frequency range of interest. In this example, a number of specific frequencies are selected within the frequency range of interest. At each of these specific frequencies, the system is solved. For example, if the frequency range of interest is 100Hz to 10kHz, in a specific example, the system is solved at 100 separate frequencies (100Hz, 200Hz, 300Hz, ..., 9900Hz, 10000Hz). This is enabled in the SCRBE method, since frequency is treated as a parameter. Therefore, a "sweep" over the entire frequency range can be performed in a computationally efficient manner. Once the sweep is completed this sweep, the complete frequency-domain response of the system based on the specified loading has effectively been computed.

The method of the present example has a number of advantages over other Reduced Basis Finite Element methodologies, and in particular over the Static Condensation Reduced Basis Element described above. The present method maintains the speed, scalability and parametric approach of the above SCRBE method. Additionally, the present method enables loading to be incorporated directly into the calculations. By contrast, the 'modal approach', as described above, is based entirely on eigenmode/eigenvalue calculations, which correspond to natural or unloaded frequencies of the corresponding parameters. By incorporating frequencies other than the natural frequencies of the parameters, the accuracy of the results will increase.

It will be appreciated that, in most examples, the derivation requires a number of sub steps or procedures to be performed. For example, a dataset may be derived based on a Finite Element Analysis being performed based on a number of specific parameter values for one or more selected parameters, wherein the selection of parameter values and/or parameters may be performed based on one or more selection criteria. This will be described in more detail below. In some examples, one or more post processing steps are performed to generate or transform data for subsequent steps.

In a third step 203, the virtual wind power generation structure 100 is assembled based on the plurality of virtual components 104. The step of assembling may be carried out in any suitable manner.

In a fourth step 204, a time domain simulation 112 is performed of the virtual wind power generation structure 100 based on the derived datasets 110. Any suitable or relevant time domain simulation may be performed by way of a suitable methodology. In some examples, the time domain simulation comprises constructing a reduced-order model in the frequency domain.

A time domain simulation enables time-domain structural analysis to be carried out. This is a key requirement for e.g., offshore wind turbine structures, which rely on time-domain analysis for structural analysis such as fatigue assessment.

In the present example, the fourth step is performed by using the SCRBE frequency-domain solutions determined in the earlier steps to provide $V^j$. By contrast, the modal approach uses eigenvalues and eigenvectors, as discussed earlier (and is typically not based on the SCRBE approach).

The methodology of the present example is distinct from the modal approach, and addresses the limitations of the modal approach discussed earlier. Firstly, the SCRBE-based frequency-domain-to-time-domain approach is inherently parametric, since all system-level solves are performed (in the frequency) domain using the parametric SCRBE approach, followed by the fourth step, wherein the dataset derived in the second step is translated to the time-domain. The fourth step is computationally efficient, i.e., it can be performed rapidly and requires fewer resources than the corresponding step of the modal approach. This means that a user of a computing system implementing the present method is able to efficiently change parameters and re-solve, unlike with the modal approach.

Secondly, the SCRBE-based frequency-domain-to-time-domain approach of the present example accurately represents the system response to forced vibration, because the methodology is based on the Helmholtz elastodynamics approach. As discussed above, the Helmholtz elastodynamics approach is inherently based on modeling a system's response to forced vibration. By contrast, and as discussed above, the modal approach does not directly represent forced vibration. Forced vibration is particularly relevant case for analysis of offshore wind turbines since they are subjected to a variety of complex loading patterns (e.g., without limitation, wind, waves, soil/pile, or moorings).

The time domain simulation may be formatted in any suitable manner and the results may be presented in any suitable manner. In some examples, the time domain simulation, when run, produces a set of simulation results 113. In other examples, no specific set of results is produced, but the time domain simulation itself is effectively the result. In the following reference will be made to the time domain simulation, although this should be taken as referring to the relevant product of the time domain simulation.

In a fifth step 205, the time domain simulation 112 is evaluated according to a set of evaluation criteria 114. The evaluation may be carried out in any suitable manner.

Any suitable or relevant evaluation criteria may be used. In some examples, the evaluation criteria comprises one or more physical parameters 114A with which the simulation results can be compared. For example, physical parameters can comprise material parameters or parameter ranges (e.g., material tolerances) that can be used to verify whether the simulation results fall within physically realistic parameters. In some examples, the evaluation criteria comprises one or more verification parameters 114B or checksums, which can be used to verify the integrity or accuracy of the simulation results.

In some examples, the evaluation criteria contains one or more accuracy indicators. In essence, such accuracy indicators are quantities obtained separately from the modelling steps (e.g., by way of post processing) in order to confirm the results computed by the modelling steps. Such accuracy verification may be of particular importance for some modelling methodologies, such as reduced order modeling methods. In some examples, the evaluation step comprises computing one or more additional quantities based on the modelling results, for interpretative purposes. Examples of such additional quantities include, but are not limited to: failure checks or structural fatigue checks.

In some examples, the evaluation step comprises a plurality of evaluation sub-steps. Each of such evaluation sub-steps, in some examples, comprise one or more portions or further sub-steps.

It will be appreciated that the above-described method steps are exemplary only, and that additional and/or alternative steps may be included in the exemplary method.

In one example, subsequent to evaluation, the time domain simulation 112 (or the time domain results 113) is transmitted or exported 206 to a further element or component 116 of the system. The data may be exported to any suitable further component 116, including (without limitation): an updater; a database; or one of the models 102 of the virtual wind power generation structure 100 or a virtual component 104 or virtual sub structure 106 thereof . In some examples, the simulation results are used as a feedback mechanism, e.g., to update one or more models of the virtual wind power generation structure. This can be useful during a design phase, enabling a designer to iterate and optimize the design of the virtual wind power generation structure.

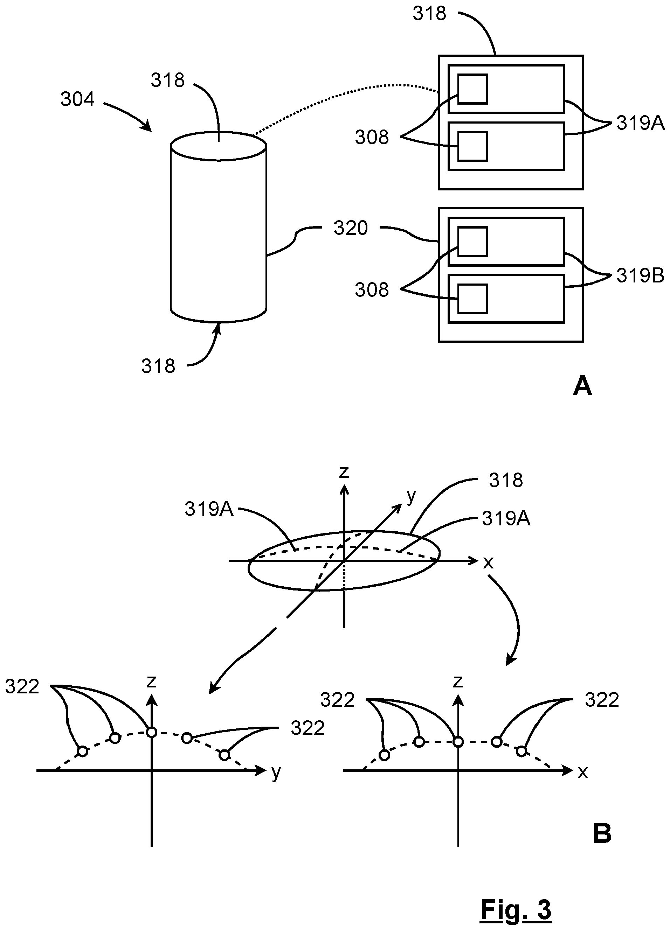

An exemplary virtual component 304, such as may be implemented and used in the systems and methods described above, will now be described with reference to Figure 3A and Figure 3B. For ease of comparison with Figure 1, elements of Figure 3 similar to corresponding elements of Figure 1 are labelled with reference signs similar to those used in the preceding Figures, but with prefix "3".

The virtual component 304 comprises a suitable portion of the virtual wind power generation structure (not shown). As discussed, the virtual wind power generation structure may be divided into one or more sub-structures. For example, if the virtual wind power generation structure is a wind turbine, the virtual wind power generation structure may comprise several sub structures, such as: a nacelle, a pylon, and a foundation. Each of these sub structures may contain one or more virtual components.

In the present example, purely for illustrative purposes, the virtual component 304 comprises a portion of the pylon of a wind turbine.

The virtual component 304 comprises a number of properties of one or more specific types. For example, the virtual component, in some examples, comprises a set of interface surfaces (also known as 'ports') 318, on which the virtual component is connectable with other virtual components. This enables the virtual wind power generation structure to be assembled from a plurality of connected virtual components. In effect, for two virtual components to be connectable, it is necessary for each of these two components to have a matching interface surface or port.

The interface surface (or port) 318 is defined by one or more component functions 319A (also referred to as 'interface functions'), which describe the surface, shape and/or behaviour of the interface surface 318.

The component functions and corresponding parameters describe the properties or characteristics of the relevant part of the virtual component. For example, parameters may describe physical or mechanical constants, variables or characteristics relevant to the interface surface or the virtual component. It will be appreciated that the number and type of parameters used by any of the component functions 319A may be dependent on a number of factors, including (but not limited to): the type of component function, the properties of the interface surface; or a selected complexity of the component function.

Each of the parameters 308 may comprise any suitable information or data content. The data content may be formatted and stored in any suitable or relevant manner within the corresponding parameter. In some examples, at least some of the parameters comprises parameter ranges.

The virtual component additionally comprises an internal surface or structure 320. An internal surface or structure, for the purposes of the present disclosure, is defined as a surface or structure that is not configured to be in contact with other virtual components or the interface surfaces thereof. In the present example, the virtual component has an internal surface that defines the outer structure or surface of the pylon of the wind turbine.

Similarly to the interface surfaces, the internal surface 320 is defined by one or more component functions 319B. Each of these one or more component functions describe the surface, shape and/or behaviour of the internal surface. In some examples, the one or more component functions is dependent on at least one virtual component parameter 308. The component functions may be dependent on any suitable number (or type) of virtual component parameters. For purposes of conciseness, the component functions for the internal surface will not be described in further detail, but it will be appreciated that these are, in substance, similar to the component functions described above.

For illustrative purposes, a set of exemplary component functions 319A for an interface surface 318 will now be discussed in more detail with reference to Figure 3B. It will be appreciated that this is purely for illustrative purposes, and that one of the component functions 319B could equally well have been described. In the present example, each of the component functions is dependent on a single parameter t only. This is purely for illustrative purposes, and it will of course be appreciated that, as described above, component functions may be dependent on any suitable or relevant number of parameters.

In the present example, the component functions 319A consist of a plurality of discrete data points 322. The data points fall within an overall parameter range for the parameter t. The data points may be determined or derived in any suitable fashion.

Any suitable number of data points 322 may be selected, determined or derived at a suitable time. A higher number of data points may increase the accuracy of the model. However, it will be appreciated that each data point to be determined or derived requires computational resources as well as time. As part of the present methods, the number of data points computed or utilized for any given component function is limited to a selected number.

The number and/or distribution of data points and/or the relevant parameter values to be used for computing the data points may be selected in any suitable fashion and using a suitable set of criteria. The set of criteria may be dependent on any suitable requirements, and may in some examples be adaptive or variable in dependence on one or more circumstances. In some examples, the number and/or distribution of data points and/or the relevant parameters are selected using an algorithm. In an example, the distribution of data points is determined by way of an adaptive Greedy algorithm.

In some examples, additional data points may be added subsequently to the initial set of data points. Such additional data points may be obtained in any one of a suitable number of ways. One or more of such additional data points may be obtained by way of experimental measurements or live data. One or more of such additional data points may be based on calculations carried out separately or by other parties. One or more of such additional data points may be based on previous simulations or modelling results that have been fed back during an exporting step (such as described above).

Taken together, the data points 322 create a basis which is used to determine solutions to the component function for the whole of the parameter range t in an efficient manner. In order to enable the component function to return a result for any value in the parameter range, rather than only for the data points, a solving method or algorithm is used. Any suitable solving method or algorithm, using any suitable solving methodology, may be used.

The component function described in the above is purely for illustrative and exemplary purposes only. It will be appreciated that component functions may be structured and/or formatted differently than as discussed in the present example whilst fulfilling substantially the same purpose.

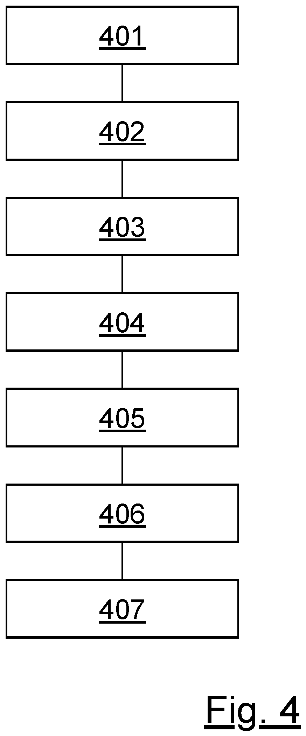

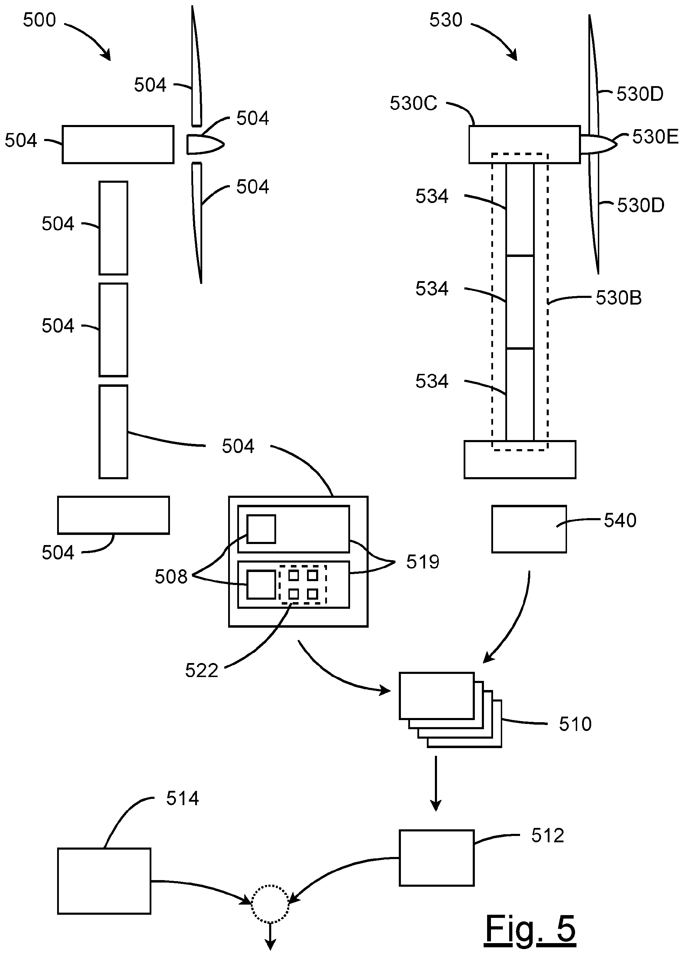

A second exemplary method and system for modelling a virtual wind power generation structure will now be discussed with reference to Figure 4 and Figure 5. For ease of comparison with Figure 1, elements of Figure 4 similar to corresponding elements of Figure 1 are labelled with reference signs similar to those used in the preceding Figures, but with prefix "4".

In the exemplary method, the virtual wind power generation structure 500 is associated with a physical wind power generation structure 530. In some examples, the virtual wind power generation structure is a 'digital twin' of the physical wind power generation structure. In other examples, data from the physical wind power generation structure 530 is used in the exemplary method to increase the accuracy or efficacy of the method. Such real world data can, for example, be used to calibrate the method so as to ensure that the results are sufficiently accurate.

The physical wind power generation structure 530 comprises a plurality of sub structures. Purely for illustrative purposes, in the present example the physical wind power generation structure is a wind turbine. In this example, the physical wind power generation structure comprises the following physical sub structures: a foundation element 530A; a pylon 530B; a nacelle 530C; and a number of turbine blades 530D attached to a central shaft 530E. In some examples, one or more of the sub structures is further subdivided into a number of physical components 534.

In a first step 401, a plurality of virtual components 504 are defined, each virtual component being dependent on one or more virtual component parameters 508. For purposes of clarity only, only a single set of virtual component parameters is illustrated in Figure 5, although it will be understood that a set of virtual component parameters is defined for each of the plurality of virtual components.

Each of the virtual components is associated with a corresponding physical sub structure, or relevant portion thereof. It will be appreciated that, for one or more specific purposes, when creating the virtual structure, each of the physical sub structures is broken into a plurality of virtual components that may be assembled into a virtual component assembly that effectively mirrors the physical sub structure, at least with regard to material deformation and/or aging. For example, the pylon 530B of the physical wind power generation structure is, in the virtual wind power generation structure 500, divided into a number of virtual components 504. By dividing the pylon into a number of sections, the modelling steps for each of the virtual components are simplified, whilst increasing the accuracy thereof.

It will be appreciated that, whilst described separately in the present example, in some examples two or more virtual components are grouped into one or more virtual component assemblies for computational or modelling purposes. In some examples, such virtual component assembles are created on a temporary basis, for example to simplify one part of the modelling process (e.g., to free computational resources for modelling other virtual components of the virtual wind power generation structure).

In a second step 402, at least one physical dataset 540 is received for at least one of the plurality sub structures, or portions thereof, comprised in the physical wind power generation structure 530. In some examples, the at least one physical dataset 540 is associated with one of the physical components 534.

Any suitable number of physical component datasets may be received, each said dataset comprising any suitable data content. In some examples, the at least one physical dataset comprises one or more physical component parameters. For example, the physical dataset can comprise material parameters for the relevant physical component of sub structure.

The physical dataset 540 may be received in any suitable fashion. In some examples, the physical component dataset comprises experimental data or measurement data obtained from one or more sensors attached to or otherwise used to monitor the physical wind power generation structure 530. Alternatively or in combination, the physical component dataset comprises experimental data or measurement data obtained in advance on the elements and/or materials before building the physical wind power generation structure 530. In some examples, the receiving step comprises one or more processing sub-steps. For example, the received dataset may require formatting, encoding, decryption or other processing that enables it to be used in the subsequent steps.

The physical dataset 540 is received at a suitable time. In some instances, the dataset is received via a live data feed from the physical wind power generation structure. In other situations, the physical component dataset is received at regular intervals (e.g., hourly, daily, weekly or monthly).

In a third step 403, one or more data points 522 are determined for a component function 519 for at least one of the virtual components, the component function being dependent on at least one of the one or more virtual component parameters 508, each of the data points falling within a parameter range of the at least one of the one or more virtual component parameters. Purely for purposes of conciseness and clarity, the component functions are in the present example referred to and described in general terms only. It will nevertheless be appreciated that, as described above, the component functions may relate to only a single portion, surface, or structure comprised in the virtual component.

In the present example, the virtual component parameters are defined so as to correspond to physical parameters. For example, for material-related parameters, the value ranges of the virtual component parameters are defined so as to be within physical constraints or otherwise to correspond to the corresponding physical component parameters.

The determination step may be performed in any suitable fashion and using any suitable methodology. In the present example, the determination step is performed using an adaptive Greedy algorithm in a manner substantially similar to that described above. In another example, the determination step is performed by way of Proper Orthogonal Decomposition (POD).

In a fourth step 404, at least one solution to the component function is determined based on the one or more data points and a solving method. The solution may be determined in any suitable fashion. Any number of solutions may be determined. In some examples, a plurality of solutions are derived for a plurality of virtual component parameter values. It will be appreciated that for component functions that are dependent on a plurality of virtual parameters, solutions may be determined for a one or more combinations of virtual parameter values. The one or more solutions determined in the determination step are included in dataset 510.

The determination step is performed for any suitable number of virtual components 504. In some examples, the determination step is performed for each of the virtual components of the virtual wind power generation structure 500.

In a fifth step 405, the virtual wind power generation structure 500 is assembled based on the plurality of virtual components. This step may be performed in any suitable fashion. In an example, the assembly step is performed substantially in the same manner as described above.

In a sixth step 406, a time domain simulation 512 is performed of the virtual wind power generation structure based on the dataset 510.

In a seventh step 407, the time domain simulation 512 is evaluated according to a set of evaluation criteria 514. This step may be performed in any suitable fashion. In an example, the evaluation step is performed substantially in the same manner as described above.

One aspect of a virtual wind power generation structure is that it may evolve over time. This may be based on one or more updates received from the physical wind power generation structure, either due to an updated state of the physical structure or due to modifications of the physical structure. Such modifications could be due to upgrades or repair of the physical structure. Alternatively, such modifications could be proposed or intended changes that are being evaluated. Yet other examples of modifications include hypothetical 'what if' scenarios that are being evaluated by the operator of the physical wind power generation structure.

In some cases, a so-called 'digital twin' is created of an existing physical wind power generation structure. The term digital twin refers to a virtual or computational replica of a physical structure or asset, which is kept in sync with the structure during its operational lifetime, based on inspection and sensor data, for example. A digital twin can, for example be used to assess the structural integrity of a given physical structure. Updates to the digital twin may capture any structurally relevant changes to the physical structure, and can be based on, for example, inspection data (e.g. visual inspection, ultrasound thickness measurements, laser scans) or sensor measurements (e.g. accelerometers, strain gauges, environmental monitoring). This inspection and instrumentation significantly reduce the uncertainty associated with operating conditions since it allows for continuous updates the digital twin to reflect the true state of the physical structure and its environment. Through this approach, users of the methods and systems described herein may therefore develop updated management plans for the physical structure informed by the digital twin (e.g. for inspection, maintenance, repair, changes to allowable operating conditions, damage or accident response, or asset life extension) instead of relying on the plans that were developed at the time of design.

Further, since a digital twin provides a readily and efficiently modifiable structure that can be generated and updated in a convenient manner, digital twins can be used to examine or analyze scenarios or circumstances that occur infrequently. Further, potential updates, modifications or further planned developments of a structure can be examined and tested without having to actually perform the modifications or developments on the physical structure.

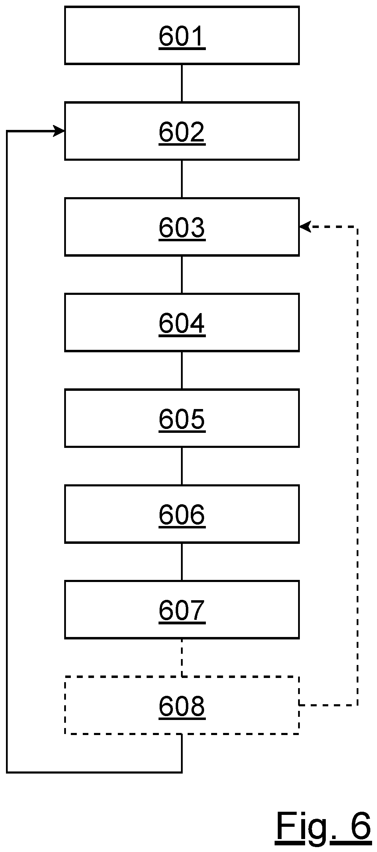

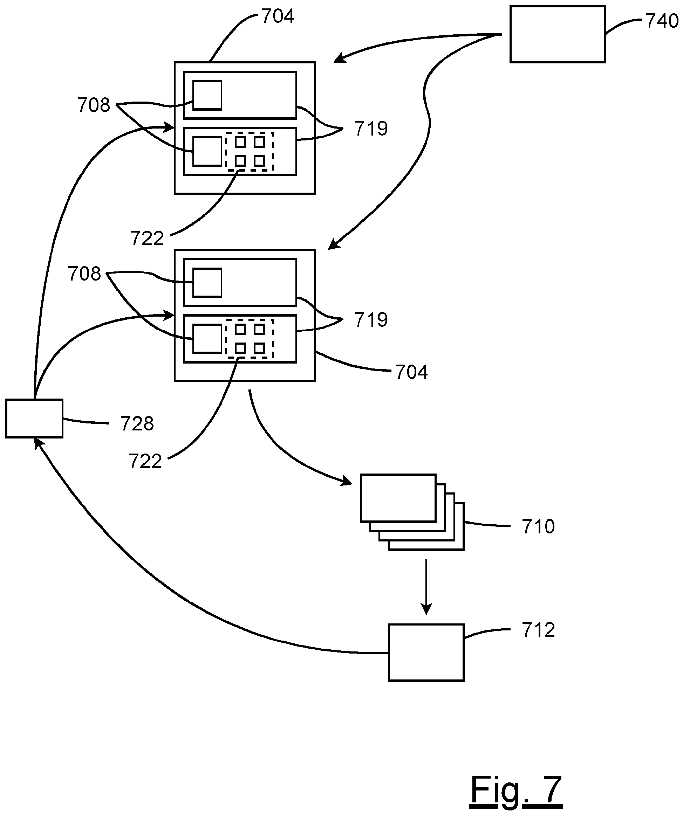

An illustrative example will now be discussed with reference to Figure 6 and Figure 7. For ease of comparison with the preceding Figures, elements of Figure 4 similar to corresponding elements of Figure 1 and Figure 5 are labelled with reference signs similar to those used in the preceding Figures, but with prefix "7". It will be appreciated that, for purposes of clarity, some of the features or elements of the virtual wind power generation structure of Figure 7 are not described in the following, but that such features or elements may nevertheless be present.

In a first step 601, a plurality of virtual components 704 are defined, each virtual component being dependent on one or more virtual component parameters 708.

In a second step 602, at least one physical dataset 740 is received for at least a sub structure of a physical wind power generation structure (not shown). The physical dataset may be received in any suitable fashion. As discussed above, in some examples, the physical dataset comprises data obtained from external sources, e.g., monitoring or measurement systems installed on an operation physical wind power generation structure. In other examples, the physical dataset comprises measurement data obtained by way of structural testing, e.g., testing performed in a lab or in an experimental testing environment. In some examples, the physical dataset comprises both operational data and testing data.

In a third step 603, one or more data points 722 are determined for a component function 719 dependent on at least one of the one or more virtual component parameters 708, each of the data points falling within a parameter range of the at least one of the one or more virtual component parameters. The data points may be determined in any suitable fashion. In some examples, the data points are determined substantially as described in the preceding example.

Additionally, in the present example, the component function 719 is updated with modelling data 728. This will be discussed in more detail with reference to one of the following steps.

In a fourth step 604, at least one solution to the component function is determined based on the one or more data points and a solving method, thereby to create dataset 710. The at least one solution may be determined in any suitable fashion. In an example, the fourth step is performed substantially in the same manner as described in the above example.

In a fifth step 605, the virtual wind power generation structure 700 is assembled based on the plurality of virtual components 708. This step may be performed in any suitable fashion. In an example, the assembly step is performed substantially in the same manner as described above.

In a sixth step 606, a time domain simulation 712 is performed of the virtual wind power generation structure based on the datasets 710. The simulation step may be carried out in any suitable fashion. In an example, the simulation is carried out substantially as described in the above examples.

In a seventh step 607, the time domain simulation 712 is evaluated according to a set of evaluation criteria 714. This step may be performed in any suitable fashion. In an example, the evaluation step is performed substantially in the same manner as described above.

The steps of the present method, as described so far, are substantially similar to those described in the preceding method. As mentioned above, however, in order to update, refine or modify the virtual wind power generation structure (e.g., to examine a 'what if' scenario or to model hypothetical situations), it is necessary to feed some or all of the data in the time domain simulation 712 back into the exemplary method.

In an eighth step 608, modelling data 728 is used to update one or more of the virtual components 704. It will be appreciated that this step may be performed in any suitable manner. In some examples, the updating step comprises a plurality of sub steps. For example, the modelling data is exported from the time domain simulation 212 in a first sub step. Any suitable modelling data may be exported. In some examples, the updating step comprises a sub step of selecting the data from the time domain simulation to be exported. In another sub step, the exported modelling data 728 is then used to update one or more of the component functions 719 of one or more of the virtual components 704. It will be appreciated that any suitable part or element of the component functions 719 and/or the virtual components 704 may be updated.

The present exemplary method may be repeated any number of times. For example, the present method may be performed at regular intervals, e.g., for purposes of maintenance or regularized evaluations of wind turbines. In other examples, as described above, the method may be performed as part of 'what if' modelling to examine various situations or scenarios for a particular wind turbine.

It will be understood that various modifications and/or improvements obvious to the person skilled in the art may be made to the various embodiments of the invention described in the present description without departing from the scope of the invention defined by the appended claims.

The present method is not limited to wind turbine modelling but may be applied to any modelling of large and/or elongated structures such as boats, power pylons, large bridges etc. The above described embodiments are not exclusive and may be mixed-up, as known by the skilled person.

**Claims**

1. A method for modelling a virtual wind power generation structure 100, the virtual wind power generation structure comprising a plurality of virtual components 104, the method comprising:

   defining a plurality of virtual components, each virtual component being dependent on one or more virtual component parameters;
   deriving a dataset in the frequency domain for each of the plurality of virtual components;
   assembling the virtual wind power generation structure based on the plurality of virtual components;
   performing a time domain simulation of the virtual wind power generation structure based on the derived datasets; and
   evaluating the simulation according to a set of evaluation criteria.

2. A method according to claim 1, wherein the step of deriving a dataset comprises:
   defining at least one component function, the component function being dependent on at least one of the one or more virtual component parameters.

3. A method according to claim 2, wherein the step of defining at least one component function comprises:

   determining one or more data points within a parameter range of the at least one of the one or more virtual component parameter;
   determining at least one solution to the component function based on the one or more data points and a solving method.

4. A method according to claim 3, wherein the solving method is a Galerkin method.

5. A method according claim 3 or claim 4, wherein the step of determining is performed using an adaptive Greedy algorithm.

6. A method according to any of claims 1 to 5, wherein at least one of the component functions for at least one of the plurality of virtual components comprises sensor data obtained from an operational data source associated with a physical wind power generation structure.

7. A method according to claim 6, wherein:

   the virtual wind power generation structure is associated with the physical wind power generation structure, the physical wind power generation structure comprising a plurality of physical components; and
   wherein each of the virtual component parameters are associated with a corresponding physical component parameter.

8. A method according to claim 7, further comprising a step of receiving a physical component dataset for at least one of the plurality of physical components comprised in the physical wind power generation structure.

9. A method according to any of claims 1 to 8, wherein the step of defining a plurality of virtual components comprises updating at least one of the plurality of virtual components.

10. A computer program comprising instructions which, when the program is executed by a computer, cause the computer to carry out the method of any of claims 1 to 9.

11. A computer readable medium including program instructions which, when executed by a computer, cause the computer to carry out the method of any of claims 1 to 9.

12. A computer system, the computer system comprising a processing unit, wherein the computer system is operable to carry out the method of any of claims 1 to 9.

**Fig. 1**

| 201 |

| 202 |

| 203 |

| 204 |

| 205 |

| 206 |

## Fig. 2

**Fig. 3**

**Fig. 4**

Fig. 5

Fig. 6

Fig. 7

Europäisches Patentamt

European Patent Office

Office européen des brevets

## PARTIAL EUROPEAN SEARCH REPORT

under Rule 62a and/or 63 of the European Patent Convention. This report shall be considered, for the purposes of subsequent proceedings, as the European search report

**Application Number**

EP 22 17 8183

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHAO XIANG ET AL: "Digital Twining of Horizontal Axis Wind Turbine With Reduced-Order Modelling Approach", INSTITUTE OF HIGH PERFORMANCE COMPUTING, AGENCY FOR SCIENCE, TECHNOLOGY AND RESEARCH , SINGAPORE, SINGAPORE, 5 June 2022 (2022-06-05), XP093001452, DOI: 10.1115/OMAE2022-81334 ISBN: 978-0-7918-8592-5 Retrieved from the Internet: URL:https://asmedigitalcollection.asme.org /OMAE/proceedings-pdf/doi/10.1115/OMAE2022 -81334/6929479/v007t08a003-omae2022-81334. pdf> * abstract; figures 3,5,12,14 * * section 3.1 par.1 * * section 3.2 * * page 2, left-hand column, last paragraph * * page 2, right-hand column, paragraph 2 * * section 3.3 * * the whole document *  -/-- | 1,6-12 | INV. F03D17/00 G06F30/23  ADD. G06F111/10 G06F111/20 G06F113/06 |

**TECHNICAL FIELDS SEARCHED (IPC)**

G06F
F03D

## INCOMPLETE SEARCH

The Search Division considers that the present application, or one or more of its claims, does/do not comply with the EPC so that only a partial search (R.62a, 63) has been carried out.

Claims searched completely :

Claims searched incompletely :

Claims not searched :

Reason for the limitation of the search:

see sheet C

| Place of search | Date of completion of the search | Examiner |
|---|---|---|
| Munich | 24 February 2023 | Dapp, Wolfgang |

EPO FORM 1503 03.82 (P04E07)

## PARTIAL EUROPEAN SEARCH REPORT

**Application Number**

EP 22 17 8183

| | DOCUMENTS CONSIDERED TO BE RELEVANT | | CLASSIFICATION OF THE APPLICATION (IPC) |
|---|---|---|---|
| Category | Citation of document with indication, where appropriate, of relevant passages | Relevant to claim | |
| | & Zhao Xiang: "Statement of Author Zhao Xiang re publication dates", , 7 June 2022 (2022-06-07), XP93026807, Retrieved from the Internet: URL:author@email.com * the whole document * ----- | | |
| A | US 2021/155325 A1 (KNEZEVIC DAVID JOHN [US] ET AL) 27 May 2021 (2021-05-27) * the whole document * ----- | 1,6-12 | |
| A | BHAT SHANKAR ET AL: "Structural Digital Twin of FPSO for Monitoring the Hull and Topsides Based on Inspection Data and Load Measurement", DAY 1 MON, AUGUST 16, 2021, 9 August 2021 (2021-08-09), XP093000241, DOI: 10.4043/31328-MS Retrieved from the Internet: URL:https://onepetro.org/OTCONF/proceedings-pdf/doi/10.4043/31328-MS/2526011/otc-31328-ms.pdf> * the whole document * ----- | 1,6-12 | **TECHNICAL FIELDS SEARCHED** (IPC) |

EPO FORM 1503 03.82 (P04C10)

**page 2 of 2**

Europäisches
Patentamt
European
Patent Office
Office européen
des brevets

INCOMPLETE SEARCH
SHEET C

```
Claim(s) completely searchable:
        6-12


Claim(s) searched incompletely:
        1


Claim(s) not searched:
        2-5


Reason for the limitation of the search:

The applicant did not respond to the request for clarification according
to Rule 63 EPC in which it was reasoned why the application did not
fulfil the requirements of Article 83 and 84 to such a degree that a
meaningful complete search cannot be carried out.
As per Rule 63(2) EPC, the application will hence be interpreted,
searched and examined as indicated in the clarification request.
In particular, in that case the qualification that step 4 of claim 1 is
carried out " based on the derived datasets" will neither be searched nor
examined, as it is insufficiently disclosed (Article 83 EPC), and unclear
and not supported by the description (Article 84 EPC).
Furthermore, step 2 of claim 1 will be interpreted to mean that a generic
modal analysis is carried out, and claims 2-5 will not be searched nor
examined, nor any part of another claim that depends exclusively on any
of those claims.
The search is thus incomplete.
```

## ANNEX TO THE EUROPEAN SEARCH REPORT
## ON EUROPEAN PATENT APPLICATION NO.

**EP 22 17 8183**

This annex lists the patent family members relating to the patent documents cited in the above-mentioned European search report.
The members are as contained in the European Patent Office EDP file on
The European Patent Office is in no way liable for these particulars which are merely given for the purpose of information.

**24-02-2023**

| Patent document cited in search report | | Publication date | Patent family member(s) | | Publication date |
|---|---|---|---|---|---|
| US 2021155325 | A1 | 27-05-2021 | AU | 2020392984 A1 | 19-05-2022 |
| | | | BR | 112022009044 A2 | 09-08-2022 |
| | | | CA | 3157791 A1 | 03-06-2021 |
| | | | CN | 114830152 A | 29-07-2022 |
| | | | EP | 4066178 A1 | 05-10-2022 |
| | | | JP | 2023502325 A | 24-01-2023 |
| | | | KR | 20220101192 A | 19-07-2022 |
| | | | US | 2021155325 A1 | 27-05-2021 |
| | | | WO | 2021105803 A1 | 03-06-2021 |

EPO FORM P0459

For more details about this annex : see Official Journal of the European Patent Office, No. 12/82